Europäisches Patentamt

European Patent Office

Office européen des brevets

(19)

(11) Numéro de publication : **0 107 125**
**B1**

(12) **FASCICULE DE BREVET EUROPÉEN**

(45) Date de publication du fascicule du brevet :
08.07.87

(51) Int. Cl.⁴ : **B 60 C   9/00**, B 60 C   9/18

(21) Numéro de dépôt : **83109956.9**

(22) Date de dépôt : **05.10.83**

(54) **Nappe protectrice pour sommet d'enveloppe de pneumatique de structure tridimensionnelle.**

(30) Priorité : **22.10.82 FR 8217963**

(43) Date de publication de la demande :
**02.05.84 Bulletin 84/18**

(45) Mention de la délivrance du brevet :
**08.07.87 Bulletin 87/28**

(84) Etats contractants désignés :
**AT BE CH DE GB IT LI LU NL SE**

(56) Documents cités :
**GB-A- 2 066 308**
**LU-A-    76 739**
**US-A-    876 616**
**US-A- 3 774 662**
**US-A- 3 900 062**
**US-A- 4 050 973**

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Gouttebessis, Jacques**
**Chanat la Mouteyre**
**F-63530 Volvic (FR)**

(74) Mandataire : **Doussaint, Jean-Marie et al**
**MICHELIN & CIE Service K. Brevets**
**F-63040 Clermont-Ferrand Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les enveloppes de pneumatiques. L'invention concerne notamment les enveloppes de pneumatiques comportant une armature destinée à rigidifier leur sommet pour permettre à ce sommet de supporter les contraintes dues au roulage. Cette armature est appelée « armature de renfort » dans la suite de cet exposé, mais elle est parfois aussi appelée « armature de travail » ou « armature de sommet » dans l'industrie des pneumatiques. Cette armature est le plus souvent constituée de plusieurs nappes superposées, à l'intérieur du sommet, chaque nappe comportant des fils ou câbles, par exemple métalliques, parallèles entre eux et croisés avec les fils ou les câbles des autres nappes. De telles armatures de renfort sont par exemple décrites dans les brevets français FR-A-1 309 356 et FR-A-2 398 623.

Le brevet US-A-3 774 662 décrit la réalisation d'une nappe de renfort qui comporte des fils de renfort ayant une multiplicité d'ondulations disposées dans des plans, et des moyens de liaison de faible résistance maintenant de façon provisoire ces fils de renfort à l'état ondulé. Lors de la conformation de l'enveloppe de pneumatique comportant cette nappe, les moyens de liaison se rompent pour que les câbles de renfort perdent leur ondulation.

Lorsque les enveloppes de pneumatiques avec armature de renfort roulent sur des surfaces qui comportent des aspérités agressives, ou lorsqu'elles rencontrent accidentellement des obstacles, ces aspérités ou ces obstacles peuvent causer des avaries au sommet des enveloppes, ces avaries étant dues soit à des perforations de l'armature de renfort, soit à des déformations excessives de l'armature de renfort ou à des fissures dans la gomme du sommet par suite de chocs.

Pour tenter d'éviter ou de limiter ces avaries on utilise de façon connume une ou plusieurs nappes dites « nappes protectrices », disposées entre la bande de roulement et l'armature de renfort.

Il est connu d'utiliser des nappes protectrices comportant des câbles parallèles entre eux dans chaque nappe et faisant un angle faible, par exemple inférieur à 30° avec le plan équatorial de l'enveloppe, ces câbles étant notamment métalliques dans le but de mieux résister aux agressions.

Ces nappes se caractérisent par un manque de souplesse provoquant souvent une rupture des câbles de ces nappes et un cheminement d'eau le long des câbles rompus, ce qui conduit à une corrosion des nappes. On a tenté de remédier à ces inconvénients en utilisant des câbles élastiques dans ces nappes protectrices comme décrit par exemple dans la demande de brevet français n° 81 20 753 publiée sous le FR-A-2 493 236. Cette technique permet de diminuer la raideur longitudinale des câbles, ce qui réduit les ruptures de ces câbles, mais il subsiste cependant dans ces nappes une rigidité excessive dans l'épaisseur ce qui produit une compression de la gomme entre ces câbles et les obstacles lors du roulage et par suite une détérioration de cette gomme avec la formation de fissures par où pénètre l'eau qui chemine le long des câbles et donc cause la corrosion des nappes.

Il a été proposé d'utiliser des fils ondulés en hélice isolés les uns des autres, ou des paquets de fils ondulés pour la réalisation de nappes protectrices. Une telle technique est décrite par exemple dans le brevet GB-A-1 566 328. Cette technique qui ne peut être utilisée qu'avec des filaments de renfort dont la contrainte à la rupture est au moins égale à 140 kg/mm$^2$ permet l'obtention de nappes protectrices relativement souples mais les ondulations créent des zones de faiblesse dans la gomme adjacente à ces fils, car on forme ainsi des ponts de gomme de largeurs différentes. Ces zones de faiblesse dues aux ponts les plus larges sont sensibles aux ruptures ou aux perforations, de telle sorte que les nappes protectrices utilisées actuellement comportent presque toutes des câbles sans ondulation et parallèles entre eux comme décrit plus haut, avec les inconvénients précédemment mentionnés. Le but de l'invention est de supprimer ces inconvénients.

En conséquence, la nappe conforme au brevet US-A-3 774 662 et au préambule de la revendication 1 est caractérisée par le fait que chaque fil de trame ondule pratiquement dans un plan de fils de trame ; et que les fils du tissu sont réalisés avec une ou plusieurs matières dont la contrainte à la rupture est inférieure à 140 kg/mm$^2$.

L'invention concerne également les nappes ainsi définies imprégnées d'au moins une gomme de caoutchouc ainsi que les enveloppes de pneumatiques utilisant au moins une nappe protectrice conforme à l'invention.

Les exemples de réalisation de l'invention qui suivent ainsi que les figures toutes schématiques du dessin correspondant à ces exemples sont destinés à illustrer l'invention et à en faciliter la compréhension sans toutefois en limiter la portée.

Sur le dessin :

la figure 1 représente en coupe radiale une enveloppe de pneumatique conforme à l'invention avec une armature de renfort et une nappe protectrice ;

la figure 2 représente, vue de dessus, une partie de l'armature de renfort utilisée dans l'enveloppe représentée à la figure 1 ;

la figure 3 représente en coupe une portion du tissu de la nappe protectrice utilisée dans l'enveloppe représentée à la figure 1, cette coupe étant effectuée selon la ligne III-III de la figure 4 ;

la figure 4 représente, vue de dessus, le tissu représenté en partie à la figure 3 ;

la figure 5 représente en détail l'ondulation d'un fil de chaîne du tissu représenté en partie aux figures 3, 4.

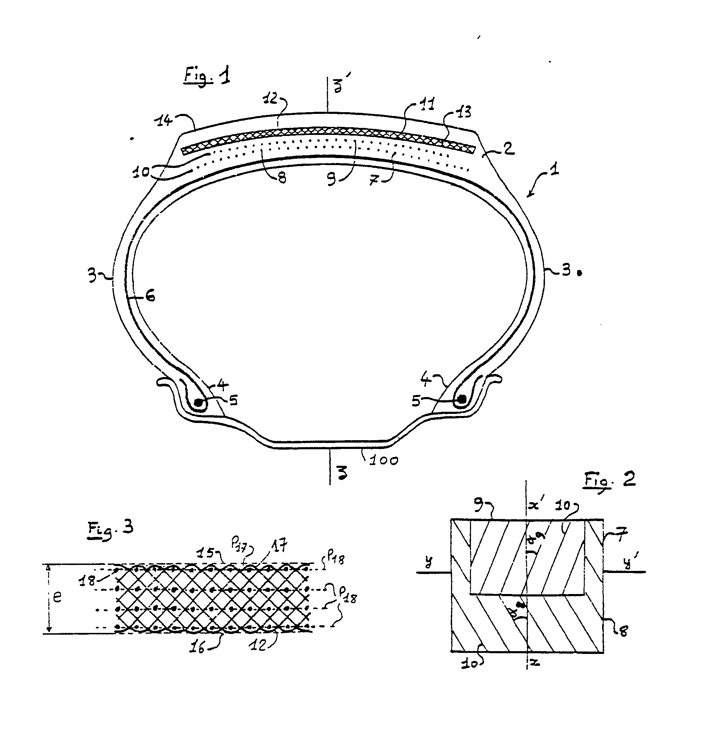

On voit à la figure 1 une enveloppe de pneumatique 1. Cette enveloppe 1 est représentée montée sur une jante 100 et gonflée. Cette enveloppe 1 comporte un sommet 2, deux flancs 3, deux bourrelets 4, chaque bourrelet étant par exemple renforcé avec une tringle 5. Une nappe carcasse radiale 6 s'étend d'un bourrelet 4 à l'autre en entourant les tringles 5 de façon connue en soi. Le sommet 2 comporte une armature de renfort 7 constituée par exemple de façon connue de deux nappes 8, 9 superposées dites « nappes de travail » chacune de ces nappes comportant des fils ou assemblages de fils 10, parallèles entre eux et croisés avec les fils ou assemblages de fils 10 de l'autre nappe.

A titre d'exemple, ces éléments 10 sont des câbles métalliques mais on pourrait utiliser d'autres éléments 10, par exemple des fils unitaires métalliques, des fils ou des assemblages de fils réalisés avec une matière non métallique, par exemple un polymère organique.

Le terme « sommet » doit être pris dans un sens très général et couvre non seulement la partie de l'enveloppe 1 qui se trouve directement au-dessus ou au-dessous de l'armature 7 mais également ce qu'on appelle parfois les « épaules » de l'enveloppe 1, c'est-à-dire les parties latérales supérieures de l'enveloppe 1 qui se trouvent au contact des flancs 3.

La figure 2 représente, vue de dessus, une partie des nappes 8, 9 toute la partie du sommet 2 située au-dessus de ces nappes étant supposée enlevée. Les câbles 10 de la nappe 8 font l'angle aigu $\alpha_8$ avec le plan équatorial de l'enveloppe 1, ce plan équatorial étant le plan perpendiculaire à l'axe de révolution de l'enveloppe et passant par le milieu du sommet 2. A la figure 2 ce plan équatorial est schématisé par la ligne xx' et l'axe de révolution de l'enveloppe est schématisé par la ligne yy', le plan équatorial étant schématisé par la ligne zz' à la figure 1.

Les câbles 10 de la nappe 9 font l'angle aigu $\alpha_9$ avec le plan équatorial xx'. Ces angles $\alpha_8$, $\alpha_9$ sont disposés de part et d'autre du plan xx', chacun de ces angles étant par exemple compris entre 15 et 30°. Pour la clarté du dessin les câbles 10 ont été représentés dans chaque nappe 8, 9 plus écartés qu'ils ne le sont en réalité. Les nappes 8, 9 sont disposées au-dessus de la nappe carcasse 6, c'est-à-dire que les distances radiales de ces nappes sont supérieures à la distance radiale de la carcasse 6. Il peut être avantageux d'utiliser en outre dans le renfort 7 d'autres nappes, par exemple une ou plusieurs nappes de triangulation dont les câbles sont sensiblement perpendiculaires au plan équatorial, ces nappes étant notamment situées sous les nappes 8, 9. De telles nappes connues en soi ne sont pas représentées sur le dessin dans un but de simplification.

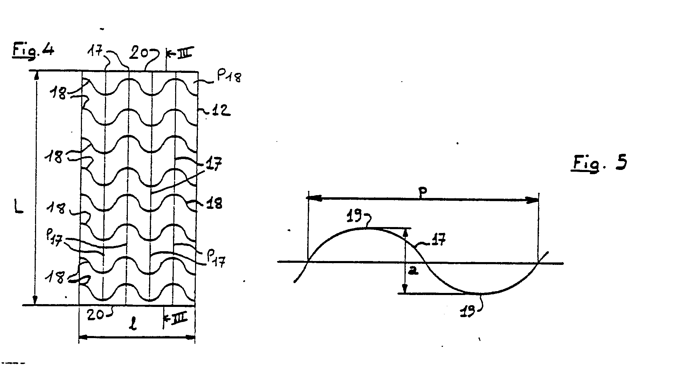

Au-dessus de l'armature de renfort 7 se trouve une nappe protectrice 11 conforme à l'invention, c'est-à-dire que la distance radiale de cette nappe protectrice 11 est supérieure aux distances radiales des nappes 8, 9. Toutes ces distances radiales sont par définition mesurées par rapport à l'axe de révolution yy' et dans le plan équatorial, ces distances radiales n'étant pas représentées sur le dessin dans un but de simplification. Cette nappe protectrice 11 est constituée par un tissu 12 imprégné d'une gomme 13. Au-dessus de la nappe protectrice 11 se trouve la bande de roulement 14, c'est-à-dire la gomme destinée à venir au contact de la surface sur laquelle roule l'enveloppe 1. Les gommes 13, 14, de même que les autres gommes utilisées pour la réalisation de l'enveloppe 1, comportent de façon connue en soi un ou plusieurs élastomères. Une portion du tissu 12 de la nappe protectrice 11 est représentée plus en détail en coupe à la figure 3 et vue de dessus à la figure 4. Ce tissu 12 comporte deux faces principales 15, 16. Ces faces 15, 16 sont représentées sous forme de droites pointillées à la figure 3, ces faces étant alors planes, c'est-à-dire que le tissu 12 est représenté sur ces figures 3 et 4 avant son utilisation dans le sommet 2, son orientation générale étant alors plane.

L'épaisseur « e » du tissu 12 est la distance qui sépare les faces 15, 16, cette épaisseur « e » correspondant pratiquement à l'épaisseur radiale de la nappe protectrice 11 dans le sommet 2.

Le tissu 12 comporte des fils de chaîne 17 et des fils de trame 18.

Chaque fil de chaîne 17 ondule pratiquement dans un plan $P_{17}$ perpendiculaire aux faces 15, 16, ce fil 17 étant alternativement tangent à l'une des faces principales 15, 16, puis à l'autre (figure 3), ce fil 17 ayant une orientation moyenne dans la direction de la longueur L du tissu 12 (figure 4). Les fils de trame 18 sont disposés entre les fils de chaîne 17, pratiquement sur plusieurs plans $P_{18}$ dans l'épaisseur « e », ces plans $P_{18}$ étant parallèles aux faces principales 15, 16.

Les plans $P_{17}$ sont représentés par des droites continues à la figure 4 et les plans $P_{18}$ sont représentés par des droites pointillées à la figure 3. Le tissu 12 est donc tridimensionnel puisque ses fils 17, 18 sont distribués dans les trois dimensions.

Chaque fil de trame 18 est ondulé pratiquement dans un plan $P_{18}$ comme représenté à la figure 4, ce fil ayant une orientation moyenne dans la direction de la largeur « l » du tissu 12. Dans ce plan il existe plusieurs fils de trame 18 et, de préférence, les fils de trame 18 de ce plan sont en phase, comme représenté à la figure 4, deux tels fils de trame successifs se correspondant alors par une simple translation dans la direction de la longueur L.

La structure du tissu 12 est ainsi la même que celle décrite dans le brevet français 1 526 185, avec la différence que les fils de trame 18 du tissu 12 sont ondulés. Pour la clarté du dessin, les fils de chaîne 17 et de trame 18 ont été représentés plus écartés qu'ils ne le sont en réalité, et les fils de trame 18 ont été représentés par des points à la figure 3. Les ondulations des fils 17, 18 peuvent être éventuellement constituées en partie par des lignes pratiquement rectilignes.

Lorsque la nappe 11 est incorporée dans l'enveloppe 1, la largeur « l » correspond pratiquement,

aux déformations de conformation près, à la largeur de la nappe 11 mesurée sur cette nappe et dans un plan contenant l'axe de révolution yy' tandis que la direction de la longueur L correspond à la direction longitudinale du sommet 2, cette direction étant parallèle au plan équatorial. Il va de soi que les proportions relatives des valeurs de « l » et L entre elles peuvent être quelconques.

A titre d'exemple les caractéristiques de la nappe 11 sont les suivantes lorsqu'elle est déroulée de façon que ses faces 15, 16 soient planes, c'est-à-dire avant son incorporation dans l'enveloppe 1 :

— dimensions géométriques du tissu 12 (ces dimensions étant pratiquement celles de la nappe avec sa gomme d'imprégnation 13) : largeur : 100 mm ; épaisseur : 2,3 mm ; longueur : 3,5 m ;

— la matière utilisée pour les fils de chaîne 17 et les fils de trame 18 a une contrainte à la rupture inférieure à 140 kg/mm$^2$ ; cette matière est par exemple du nylon 6,6 rétracté à 150 °C pendant une heure, ce nylon ayant, après rétraction, une contrainte à la rupture de 50 kg/mm$^2$ et un taux d'allongement à la rupture de 42 % ;

— les fils 17, 18 sont constitués chacun par un seul fil unitaire dont le diamètre est de 0,22 mm ; le nombre de fils de chaîne 17 est de 560 fils pour 100 mm de tissu 12 et le nombre de fils de trame 18 est de 240 fils pour 100 mm de tissu 12 ; le décompte des fils 17, 18 se fait sur toute l'épaisseur « e » dans un plan perpendiculaire aux faces principales 15, 16, ce plan étant soit orienté dans la direction de la largeur « l » pour le décompte des fils de chaîne 17, soit dans la direction de la longueur L pour le décompte des fils de trame 18, la distance de 100 mm précitée étant mesurée à l'intersection du plan considéré et d'une face principale 15, 16 ;

— l'ondulation de chaque fil 17, 18 se caractérise par un taux d'ondulation T = a/p, « a » étant l'amplitude de l'ondulation mesurée entre deux crêtes successives et « p » étant la longueur d'onde de cette ondulation ; la figure 5 représente à titre d'exemple l'amplitude « a » et la longueur d'onde « p » pour un fil de chaîne 17, deux crêtes successives de l'ondulation étant référencées 19 ; les fils de chaîne 17 ont un taux T égal à 18 % et les fils de trame 18 ont un taux T égal à 5 % ; pour la clarté du dessin, les ondulation des fils 17, 18 ont été accentuées aux figures 3, 4, 5 ;

— il existe quatre plans de fils de trame $P_{18}$ dans l'épaisseur « e » ;

— porosité du tissu 12 : environ 76 %, cette porosité P, déterminée par le calcul, étant égale au rapport v/V, « v » étant le volume vide du tissu et V le volume total du tissu, c'est-à-dire la somme du volume vide « v » et du volume occupé par les fils de trame 18 et les fils de chaîne 17 ;

— gomme 13 imprégnant le tissu 12 : mélange à base de caoutchouc naturel vulcanisé, ce mélange avant vulcanisation contenant des ingrédients couramment utilisés dans l'industrie des caoutchouc, par exemple du soufre, des accélérateurs de vulcanisation, du noir de carbone, et ayant après vulcanisation une dureté Shore A d'environ 50.

La nappe 11 conforme à l'invention est comparée à une nappe protectrice connu dont les caractéristiques sont les suivantes, lorsque cette nappe connue est déroulée de façon que ses faces soient planes, c'est-à-dire avant son incorporation dans l'enveloppe de pneumatique :

— dimensions géométriques : identiques à celles de la nappe 11 conforme à l'invention ;

— cette nappe connue est renforcée par des câbles d'acier élastiques, le volume des câbles d'acier étant identique à celui des fils de chaîne 17 et de trame 18 de la nappe 11 conforme à l'invention, c'est-à-dire que pour ces deux nappes la porosité P est la même. Ces câbles font un angle faible par rapport à la direction longitudinale de la nappe, cet angle étant d'environ 20°. Ces câbles sont disposés sur un seul plan parallèle aux faces principales de la nappe, sur toute la largeur de cette nappe ; chaque câble comporte trois torons, chaque toron étant constitué de 7 fils de diamètre 0,23 mm ; le pas d'enroulement des fils de chaque toron est de 4 mm et le pas d'enroulement des torons est de 6 mm ;

— gomme imprégnant les câbles d'acier : composition de caoutchouc analogue à celle de la nappe 11 conforme à l'invention, la dureté Shore A de cette composition vulcanisée étant de 80.

On compare ensuite les propriétés et les performances de ces nappes d'une part lorsqu'elles sont isolées, d'autre part lorsqu'elles sont incorporées chacune dans une enveloppe de pneumatique. Dans cet exemple, l'imprégnation du tissu 12 par la gomme 13 est supposée avoir lieu avant l'incorporation de la nappe 11 dans l'enveloppe 1, mais il va de soi que cette imprégnation pourrait avoir lieu lors de l'incorporation de la nappe 11 dans l'enveloppe 1, la nappe 11, avant cette incorporation, étant alors uniquement constituée par le tissu 12.

1. Comparaison des nappes isolées

1.1. Rapport des masses des éléments de renfort :

masse d'acier/masse de nylon 6,6 = 6,5 ;

1.2. rapport des contraintes à la rupture C des fils d'acier et des fils de nylon 6,6 :

C fils d'acier/C fils de nylon 6,6 = 5,

l'acier ayant une contrainte à la rupture de 250 kg/mm$^2$ ;

1.3. taux d'allongement à la rupture $\varepsilon_R$ des fils d'acier et des fils de nylon 6,6 :

fils d'acier : 1 à 2 % ;
fils de nylon 6,6 : 42 % ;

1.4. rapport des souplesses $S_e$ des nappes dans la direction de l'épaisseur « e » :

$S_e$ nappe connue/$S_e$ nappe 11 = 0,6 ;

Chaque souplesse $S_e$ est déterminée en mesurant la force F nécessaire pour faire pénétrer dans chaque nappe un cylindre rigide de 10 mm de diamètre sur une distance $\Delta_e$ égale à 40 % de l'épaisseur de chaque nappe, l'axe du cylindre étant perpendiculaire aux faces principales de la nappe considérée ; $S_e$ est définie, pour chaque nappe, par la relation $S_e = \Delta_e/F$ ;

1.5. rapport des énergies de perforation W des nappes :

W nappe connue/W nappe 11 = 1,5.

Chaque énergie W est déterminée en laissant tomber d'une hauteur de 25 cm une pièce hémisphérique, de rayon 4 mm, la masse de la pièce variant pour que la perforation puisse se produire ; cette perforation est obtenue par l'impact de la portion hémisphérique de la pièce sur une surface rectangulaire de nappe testée (100 × 110 mm$^2$), cette surface étant maintenue tendue sur deux côtés opposés distants de 110 mm et perpendiculaires à la direction de la longueur de la nappe considérée.

Les souplesses $S_e$ et les énergies de perforation W sont déterminées sur des nappes dont les gommes d'imprégnation ont été vulcanisées après imprégnation.

La comparaison de ces résultats permet de faire les observations suivantes :

La nappe connue à câbles d'acier se caractérise par une meilleure résistance à la perforation de la nappe 11 conforme à l'invention.

La nappe 11 conforme à l'invention se caractérise par une plus. grande légèreté et une plus grande souplesse $S_e$ que la nappe connue.

2. Comparaison des nappes lorsqu'elles sont incorporées dans une enveloppe de pneumatique

Chacune des deux nappes précédemment décrites est incorporée dans une enveloppe de pneumatique en joignant bout à bout les extrémités longitudinales des nappes de façon à former une nappe sans fin, ces extrémités de la nappe 11 étant référencées 20 à la figure 4. La disposition de chaque nappe protectrice dans l'enveloppe est la même que celle décrite précédemment et représentée à la figure 1, la largeur de chacune de ces nappes, mesurée sur la nappe, dans un plan contenant l'axe de révolution yy' étant pratiquement de 100 mm, l'épaisseur radiale de cette nappe étant pratiquement de 2,3 mm, la longueur de cette nappe, mesurée dans le plan équatorial, le lon de la nappe, étant d'environ 3,5 m.

Au voisinage du plan équatorial de l'enveloppe 1 le tissu 12 a les caractéristiques suivantes : les fils de chaîne 17 sont ondulés dans des plans pratiquement parallèles au plan équatorial, et les fils de trame 18 sont pratiquement ondulés dans des cylindres dont l'axe est l'axe de révolution yy', les fils de trame 18 de chaque cylindre étant de préférence en phase, c'est-à-dire que deux tels fils de trame 18 se correspondent par une simple rotation d'axe yy', les autres caractéristiques géométriques de ces fils de chaîne 17 et de ces fils de trame 18 étant pratiquement les mêmes que celles décrites précédemment dans le cas où le tissu 12 a des faces principales 15, 16 planes.

Dans l'enveloppe 1, chacun des cylindres où ondulent des fils de trame 18 correspond à un plan $P_{18}$, c'est-à-dire qu'il y a quatre de ces cylindres pour le tissu 12 dont les caractéristiques ont été données précédemment à titre d'exemple. Le tissu 12 garde donc une structure tridimensionnelle dans l'enveloppe terminée.

Les enveloppes de pneumatiques comportant soit la nappe protectrice connue soit la nappe 11 ne se distinguent que par la nappe protectrice. Tous les autres constituants sont identiques. Ces enveloppes ont la dimension 1 100-20 et chaque armature de renfort 7 de ces enveloppe comporte quatre nappes :

deux nappes de travail 8, 9 ; les câbles 10 de chacune de ces nappes 8, 9 font un angle $\alpha_8$, $\alpha_9$ pratiquement égal à 20° avec le plan équatorial, les câbles étant croisés d'une nappe à l'autre ; les câbles d'acier 10 de ces nappes 8, 9 sont constitués chacun de 27 fils de diamètre 0,23 mm, dans chaque nappe 8, 9, les axes de deux câbles 10 voisins sont séparés par une distance de 2,5 mm ; la nappe supérieure 9 a une largeur de 160 mm et la nappe inférieure 8 a une largeur de 180 mm, ces largeurs étant mesurées sur les nappes considérées, dans un plan contenant l'axe de révolution yy' ;

deux nappes de triangulation disposées chacune d'un côté du sommet entre les nappes de travail 8, 9 et la carcasse 6 ; ces deux nappes, disposées de part et d'autre du plan équatorial, ont des câbles d'acier identiques aux câbles 10 des nappes de travail 8, 9, les câbles de ces nappes de triangulation étant sensiblement perpendiculaires au plan équatorial ; la largeur de chacune de ces nappes, mesurée sur la nappe, dans un plan contenant l'axe de révolution yy' est de 60 mm.

Ces enveloppes sont usées dans les mêmes conditions jusqu'à ce que la profondeur de sculpture soit de 1 mm.

Chacune de ces enveloppes est gonflée à 8 bars et on la fait rouler à 50 km/h, sous une charge de 3 250 kg, sur un volant équipé d'une protubérance ogivale de 37 mm de haut, le volant et la protubérance étant identiques dans les deux essais.

On décompte ensuite dans la nappe de travail supérieure 9 le nombre $N_1$ de câbles touchés et le nombre $N_2$ de câbles cassés après chaque passage sur la protubérance. Les résultats sont donnés dans le tableau ci-dessous :

| | $N_1$ | $N_2$ |
|---|---|---|
| nappe protectrice connue | 5 | 4 |
| nappe protectrice 11 | 3 | 3 |

La nappe 11 conforme à l'invention permet donc de diminuer de 40 % le nombre de câbles touchés et de diminuer de 25 % le nombre de câbles cassés dans la nappe de travail supérieure 9. On constate d'autre part qu'aux points d'impact de la protubérance la bande de roulement 14 présente des fissures beaucoup moins marquées lorsqu'on utilise la nappe 11 conforme à l'invention, que lorsqu'on utilise la nappe protectrice connue. Il s'ensuit que la nappe 11 conforme à l'invention diminue très notablement les avaries de l'armature de renfort 7 dues aux chocs, ainsi que les risques de corrosion dûs à la migration de l'eau dans les fissures de la gomme et le long des câbles métalliques touchés ou cassés.

Ce résultat est surprenant étant donné que la comparaison des nappes isolées précédemment décrite montre que la nappe connue résiste mieux à la perforation que la nappe conforme à l'invention.

Ce résultat est dû à la structure tridimensionnelle du tissu 12 et plus particulièrement au fait que les fils 17, 18 de ce tissu sont ondulés.

En plus de la protection efficace du sommet, la nappe 11 a l'avantage d'être facile à réaliser par tissage et de pouvoir être incorporée aisément dans une enveloppe de pneumatique sans risque de déplacement ou de déformation lors de cette incorporation.

Dans la nappe 11 conforme à l'invention les fils 17, 18 ont été décrits comme étant chacun constitué d'un seul fil unitaire. Il va de soi que chacun de ces fils peut être aussi constitué par un assemblage de plusieurs fils unitaires de façon à former par exemple un câble.

Le tissu 12 de la nappe 11 peut être réalisé avec des matières autres que le nylon 6,6, par exemple une matière minérale, notamment le verre, ou une matière métallique, notamment l'acier, mais dans ce cas il est préférable d'utiliser des fils unitaires pour limiter la migration d'eau le long de la matière métallique et pour limiter ainsi la corrosion.

L'invention présente l'intérêt de permettre la réalisation du tissu 12 avec des matières dont la contrainte à la rupture est inférieure à 140 kg/mm$^2$, notamment des polymères organiques, or l'emploi de polymères organiques est très avantageux car on favorise ainsi la légèreté et la résistance à la corrosion des enveloppes, de plus on peut faire varier dans de larges limites l'allongement à la rupture et la contrainte à la rupture des fils de chaîne 17 et des fils de trame 18.

En plus du nylon 6,6 précédemment mentionné on peut employer d'autres polymères organiques comme par exemple d'autre polyamides, notamment les polyamides aromatiques, des polyesters, des polyimides, des polymères vinyliques ou acryliques, la rayonne. Il va de soi que la nappe 11 peut comporter des fils réalisés avec au moins deux matières différentes, par exemple des fils de chaîne en polyester et des fils de trame en nylon 6,6.

La gomme 13 imprégnant le tissu 12 de la nappe de protection 11 doit être suffisamment souple pour permettre les déformations de cette nappe. La dureté Shore A de cette gomme après vulcanisation varie de préférence, pour cette raison, de 40 à 70 et avantageusement de 50 à 60. La porosité du tissu 12 doit être suffisante pour permettre une migration de la gomme 13 dans tout ce tissu, cette porosité variant par exemple de 60 à 90 %.

La largeur de la nappe 11 peut être variable. C'est ainsi que cette largeur peut être inférieure, égale ou supérieure à la largeur de la nappe de travail 9 la plus proche. Il est cependant préférable que la largeur de la nappe 11 soit au moins égale à la moitié de la largeur de cette nappe 9. Ces largeurs sont mesurées sur les nappes considérées et dans un plan contenant l'axe de révolution yy', ces largeurs ne sont pas référencées sur le dessin dans un but de simplification.

L'enveloppe de pneumatique comportant la nappe protectrice conforme à l'invention peut avoir des caractéristiques différentes de celles qui ont été précédemment décrites. C'est ainsi par exemple que le renfort de sommet peut être constitué d'une nappe, ou comporter plus de deux nappes, chacune de ces nappes pouvant avoir une structure différente de celle qui a été décrite. On peut également utiliser plus d'une nappe protectrice conforme à l'invention dans une même enveloppe.

L'enveloppe conforme à l'invention peut être réalisée par exemple par confection sur un tambour ou selon d'autres techniques. Cette enveloppe peut être réalisée par exemple en incorporant la ou les nappes protectrices dans le sommet au cours d'un rechapage. Il va de soi aussi que l'invention s'applique aux enveloppes de pneumatiques dont la carcasse n'est pas radiale, cette carcasse étant par exemple croisée, auquel cas ces enveloppes peuvent être dépourvues d'armature de renfort dans le sommet.

L'invention s'applique également aux enveloppes de pneumatiques dont les flancs sont dépourvus d'armature de renfort.

## Revendications

1. Nappe (11) destinée a être utilisée comme nappe protectrice dans le sommet (2) d'une enveloppe de pneumatique (1) constituée au moins en partie par un tissu tridimensionnel (12) avec deux faces principales (15, 16), ledit tissu (12) comportant des fils de chaîne (17) et des fils de trame (18) ; lorsque le tissu (12) a une orientation générale plane, ses deux faces principales (15, 16) étant alors planes, chaque fil de chaîne (17) ondule pratiquement dans un plan ($P_{17}$) perpendiculaire aux faces principales (15, 16) du tissu (12) en étant alternativement tangent à l'une des faces principales (15, 16) du tissu (12) puis à l'autre, les fils de trame (18) sont disposés entre les fils de chaîne (17), pratiquement sur plusieurs plans ($P_{18}$) dans l'épaisseur « e » du tissu (12), les plans ($P_{18}$) de fils de trame (18) étant parallèles aux faces principales (15, 16) du tissu (12), caractérisée par le fait que chaque fil de trame (18) ondule pratiquement dans un plan ($P_{18}$) de fils de trame (18) ; et que les fils (17, 18) du tissu (12) sont réalisés avec une ou plusieurs matières dont la contrainte à la rupture est inférieure à 140 kg/mm$^2$.

2. Nappe (11) selon la revendication 1, caractérisée en ce que chaque fil de chaîne (17) a une orientation moyenne dans la direction de la longueur L du tissu (12).

3. Nappe (11) selon l'une quelconque des revendications 1 à 2, caractérisée en ce que chaque fil de trame (18) a une orientation moyenne dans la direction de la largeur « l » du tissu (12).

4. Nappe (11) selon l'une quelconque des revendications 1 à 3 caractérisée en ce que, dans chaque plan ($P_{18}$) où ondulent des fils de trame (18), les ondulations de ces fils sont en phase.

5. Nappe (11) selon l'une quelconque des revendications 1 à 4, caractérisée en ce que la porosité du tissu (12) varie de 60 à 90 %.

6. Nappe (11) selon l'une quelconque des revendications 1 à 5, caractérisée en ce qu'elle comporte une gomme (13) imprégnant le tissu (12).

7. Nappe (11) selon la revendication 6, caractérisée en ce que la gomme (13) a une dureté Shore A variant de 40 à 70, après vulcanisation.

8. Nappe (11) selon la revendication 7, caractérisée en ce que la gomme (13) a une dureté Shore A variant de 50 à 60, après vulcanisation.

9. Enveloppe de pneumatique (1) comportant au moins une nappe protectrice (11) conforme à l'une quelconque des revendications 1 à 8, caractérisée en ce que, au voisinage du plan équatorial (xx', zz') de l'enveloppe (1), les fils de chaîne (17) sont ondulés dans des plans pratiquement parallèles au plan équatorial (xx', zz') et les fils de trame (18) sont pratiquement ondulés dans des cylindres dont l'axe est l'axe de révolution (yy') de l'enveloppe (1).

10. Enveloppe de pneumatique (1) comportant au moins une nappe protectrice (11) conforme à l'une quelconque des revendications 1 à 8, caractérisée en ce que le sommet (2) de l'enveloppe (1) comporte une armature de renfort (7) et en ce que la nappe protectrice (11) est disposée au-dessus de cette armature (7).

## Claims

1. A ply (11) intended to be used as protective ply in the crown (2) of a tyre (1), said ply (11) being formed at least in part by a three-dimensional fabric (12) with two principal faces (15, 16), said fabric (12) comprising warp threads (17) and woof threads (18) ; when the fabric (12) has a general orientation which is flat, its two principal faces (15, 16) being then flat, each warp thread (17) undulates practically in a plane ($P_{17}$) which is perpendicular to the principal faces (15, 16) of the fabric (12), each warp thread (17) being alternately tangent to one of the principal faces (15, 16) of the fabric (12) and then to the other ; the woof threads (18) are arranged between the warp threads (17) practically in several planes ($P_{18}$) in the thickness « e » of the fabric (12), the planes ($P_{18}$) of the woof threads (18) being parallel to the principal faces (15, 16) of the fabric (12), said ply (11) being characterized by the fact that each woof thread (18) undulates practically in a plane ($P_{18}$) of woof threads (18), and by the fact that the threads (17, 18) of the fabric (12) are made with one or more materials whose rupture stress is less than 140 kg/mm$^2$.

2. A ply (11) according to claim 1, characterized by the fact that each warp thread (17) has an average orientation in the direction of the length L of the fabric (12).

3. A ply (11) according to claim 1 or claim 2, characterized by the fact that each woof thread (18) has an average orientation in the direction of the width « l » of the fabric (12).

4. A ply (11) according to any one of claims 1 to 3, characterized by the fact that, in each plane ($P_{18}$) in which woof threads (18) undulate, the undulations of these threads are in phase.

5. A ply (11) according to any one of claims 1 to 4, characterized by the fact that the porosity of the fabric (12) varies from 60 % to 90 %.

6. A ply (11) according to any one of claims 1 to 5, characterized by the fact that it comprises a rubber (13) impregnating the fabric (12).

7. A ply (11) according to claim 6, characterized by the fact that the rubber (13) has a Shore A hardness varying from 40 to 70, after vulcanization.

8. A ply (11) according to claim 7, characterized by the fact that the rubber (13) has a Shore A hardness varying from 50 to 60, after vulcanization.

9. A tyre (1) comprising at least one protective ply (11) according to any one of claims 1 to 8, characterized by the fact that in the vicinity of the equatorial plane (xx', zz') of the tyre (1), the warp threads (17) are undulated in planes which are practically parallel to the equatorial plane (xx', zz') and by the fact that the woof threads (18) are practically undulated in cylinders whose axis is the axis of revolution (yy') of the tyre (1).

10. A tyre (1) comprising at least one protective ply (11) according to any one of claims 1 to 8, characterized by the fact that the crown (2) of the tyre (1) comprises a strengthening reinforcement (7) and by the fact that the protective ply (11) is arranged above said reinforcement (7).

## Patentansprüche

1. Decke (11), die dazu vorgesehen ist, als Schutzeinlage im Scheitel (2) eines Luftreifens (1) verwendet zu werden und die mindestens zum Teil aus einem dreidimensionalen Gewebe (12) mit zwei Hauptoberflächen (15, 16) besteht, wobei dieses Gewebe (12) Kettfäden (17) und Schußfäden (18) aufweist ; während das Gewebe (12) eine im allgemeinen ebene Orientierung aufweist und seine beiden hauptoberflächen (15, 16) ebenfalls eben sind, ist jeder Kettfäden (17) praktisch in einer Ebene ($P_{17}$) gewellt, die rechtwinkelig auf die hauptoberflächen (15, 16) des Gewebes (12) steht, indem er alternativ eine der beiden Hauptoberflächen (15, 16) und anschließend die andere des Gewebes (12) tangiert, sind die Schußfäden (18) zwischen den Kettfäden (17), praktisch in mehreren Ebenen ($P_{18}$) in der Dicke « e » des Gewebes (12) angeordnet, wobei die Ebenen ($P_{18}$) der Schußfäden (18) parallel zu den Hauptoberflächen (15, 16) des Gewebes (12) sind, gekennzeichnet, durch die Tatsache, daß jeder Schußfaden (18) praktisch in einer Ebene ($P_{18}$) der Schußfäden (18) gewellt ist und daß die Fäden (17, 18) des Gewebes (12) aus einem oder mehreren Materialien ausgeführt sind, deren Bruchspannung unter 140 kg/mm² liegt.

2. Decke (11) nach Anspruch 1, dadurch gekennzeichnet, daß jeder Kettfaden (17) eine mittlere Orientierung in der Richtung der Länge L des Gewebes (12) aufweist.

3. Decke (11) nach einem der Ansprüche 1 oder 2, dadurch gekennzeichnet, daß jeder Schußfaden (18) eine mittlere Orientierung in Richtung der Breite « I » des Gewebes (12) aufweist.

4. Decke (11) nach einem der Ansprüche 1 bis 3, dadurch gekennzeichnet, daß in jeder Ebene ($P_{18}$), in der Schußfaden (18) gewellt vorliegen, die Wellen dieser Fäden in Phase sind.

5. Decke (11) nach einem der Ansprüche 1 bis 4, dadurch gekennzeichnet, daß die Porosität des Gewebes (12) zwischen 60 und 90 % liegt.

6. Decke (11) nach einem der Ansprüche 1 bis 5, dadurch gekennzeichnet, daß sie einen Gummi (13) aufweist, der das Gewebe (12) imprägniert.

7. Decke (11) nach Anspruch 6, dadurch gekennzeichnet, daß der Gummi (13) eine Shore-A-Härte aufweist, die nach der Vulkanisation zwischen 40 und 70 liegt.

8. Decke (11) nach Anspruch 7, dadurch gekennzeichnet, daß der Gummi (13) eine Shore-A-Härte aufweist, die nach der Vulkanisation zwischen 50 und 60 liegt.

9. Luftreifen (1), der zumindest eine Schutzdecke (11) nach einem der Ansprüche 1 bis 8 aufweist, dadurch gekennzeichnet, daß in Nachbarschaft zur Äquatorialebene (xx', zz') des Luftreifens (1), die Kettfäden (17) in Ebenen gewellt sind, die praktisch parallel zu Äquatorialebene (xx', zz') liegen und daß die Schußfäden (18) praktisch in Zylindern gewellt sind, deren Achse die Drehachse (yy') des Luftreifens (1) ist.

10. Luftreifen (1), der zumindest eine Schutzdecke (11) nach einem der Ansprüche 1 bis 8 aufweist, dadurch gekennzeichnet, daß der Scheitel (2) des Luftreifens (1) eine Scheitelverstärkung (7) aufweist und daß die Schutzdecke (11) oberhalb dieser Verstärkung (7) angeordnet ist.

Fig. 1

Fig. 3

Fig. 2

Fig.4

Fig. 5